# EUROPÄISCHE PATENTSCHRIFT

(11) **EP 3 622 590 B1**
(45) Veröffentlichungstag und Bekanntmachung des Hinweises auf die Patenterteilung: **23.11.2022**
(21) Anmeldenummer: 18728043.3
(22) Anmeldetag: 09.05.2018
(51) Int. Cl.: H01S 3/00, G02F 1/365

(54) **KURZPULSLASER MIT HOHEM ZEITLICHEN KONTRAST**
SHORT-PULSE LASER WITH A HIGH TEMPORAL CONTRAST
LASER À IMPULSIONS COURTES AVEC CONTRASTE TEMPOREL ÉLEVÉ

(30) Priorität: 09.05.2017 DE 102017109954
(43) Veröffentlichungstag der Anmeldung: 18.03.2020
(73) Patentinhaber: Active Fiber Systems GmbH, 07745 Jena (DE)
(72) Erfinder: EIDAM, Tino, 07751 Jena (DE); LIMPERT, Bettina, 07751 Jena (DE)
(74) Vertreter: Schneiders & Behrendt Bochum
(86) Internationale Anmeldenummer: PCT/EP2018/062084
(87) Internationale Veröffentlichungsnummer: WO 2018/206685

(56) Entgegenhaltungen:
- US-A1- 2014 168 755
- US-A1- 2016 365 697
- Walter Koechner: "10.2 Parametric Oscillators" In: "Solid-State Laser Engineering, 4th extensively rev. and updated ed.", 1996, Springer-Verlag, Berlin Heidelberg New York, XP055500300, ISBN: 978-3-540-60237-8 Seiten 600-605, das ganze Dokument

## Beschreibung

Die Erfindung betrifft ein Lasersystem und ein Verfahren zur Erzeugung von Laserpulsen mit hohem zeitlichen Kontrast.

Kurzpulslaser, insbesondere Ultrakurzpulslaser, die Laserpulse mit einer Pulsdauer im Piko- bis Femtosekundenbereich erzeugen, haben sich in den letzten Jahren als vielfältig einsetzbare Werkzeuge z.B. in der hochpräzisen Materialbearbeitung und modernen Wissenschaft etabliert. Dabei ist insbesondere für wissenschaftliche Applikationen neben der Pulsleistung, der Pulsenergie und der Pulsdauer auch der zeitliche Pulskontrast, d.h. das Verhältnis zwischen der Pulsspitzenleistung während das Laserpulses und der Leistung von eventuellen Vor- und Nachpulsen oder anderer Untergrundstrahlung in einem gewissen Zeitfenster um das Pulsmaximum herum, ein wichtiger Parameter, der die Qualität der Laseremission bestimmt. Anforderungen an den Pulskontrast von Hochintensitäts-Kurzpulslasern können bis zu zehn Größenordnungen betragen. Das bedeutet, dass die Leistung im Pulsmaximum das 10¹⁰-fache der Leistung außerhalb des Laserpulses betragen soll.

Der zeitliche Kontrast wird durch verschiedene physikalische Effekte in realen Lasersystemen negativ beeinflusst. Der Pulskontrast kann in ungünstigen Fällen nur eine Größenordnung betragen. Verstärkte Spontanemission (ASE = "amplified spontaneous emission") tritt in jedem Laser bzw. Verstärker auf und bewirkt eine zeitlich nahezu konstante Untergrundstrahlung zur gepulsten (nutzbaren) Laserstrahlung. Vor- oder nachlaufende Nebenpulse können aufgrund von Pulsselektion auftreten. Kurzpulslasersysteme umfassen zumeist hochrepetierende modengekoppelte Oszillatoren. Um die für die jeweilige Applikation gewünschte Pulsfrequenz einzustellen, werden Pulsselektoren eingesetzt (z.B. akusto-optische oder elektro-optische Modulatoren). Solche Pulsselektoren besitzen ein endliches Auslöschungsverhältnis, was sich unmittelbar auf den Kontrast auswirkt. Nebenpulse treten außerdem aufgrund von Fehlanpassung der Dispersion in CPA-Systemen ("Chirped Pulse Amplification") und aufgrund von Nichtlinearitäten auf. In der CPA-Technologie werden die Laserpulse durch dispersive optische Elemente zeitlich gestreckt, die gestreckten Pulse, die entsprechend eine reduzierte Pulsspitzenleistung aufweisen, werden verstärkt und anschließend zeitlich komprimiert, wiederum mittels dispersiver optischer Elemente. Dabei führt jegliche Fehlanpassung von Dispersionstermen höherer Ordnung, beispielsweise durch Fehlanpassung in der Strecker-Kompressor-Anordnung selbst oder durch Toleranzen der Optik-Oberflächen oder durch eine im optischen Verstärker aufgeprägte nichtlineare Phase im Verstärkersystem (SPM, zeitliche Kerr-Nichtlinearität), zu Nebenpulsen oder zu sonstigen Leistungsanteilen, die zeitlich getrennt sind vom Nutzpuls.

Aus dem Stand der Technik sind verschiedene Ansätze zur Verbesserung des zeitlichen Kontrastes bekannt.

Beispielsweise können optische Schalter oder Modulatoren zwischen einzelnen Verstärkerstufen oder am Ausgang eines Lasersystems (z.B. Pockelszellen oder akusto-optische Modulatoren) verwendet werden, die entsprechend nur das Nutzsignal transmittieren und den zeitlichen Untergrund dämpfen. Diese Methoden verbessern den Kontrast entsprechend dem Kontrast des einzelnen Schalters/Modulators. Die Kontrasterhöhung findet auf der Zeitskala der Schaltgeschwindigkeit des verwendeten Elementes statt. Mit einer Pockelszelle lässt sich daher eine Kontrastverbesserung von bis zu 30 dB (limitiert durch den Kontrast des Polarisators) auf einer Zeitskala von ca. 1 ns realisieren.

Die sogenannte Cross Polarized Wave Generation (XPW) ist eine weitere bekannte und etablierte Methode zur Kontrastverbesserung von sub-Pikosekundenpulsen. XPW basiert auf entarteter Vier-Wellen-Mischung (FWM) und erzeugt neue Strahlung, welche orthogonal zur ursprünglichen Strahlung polarisiert ist. Typischerweise wird ein BaF₂ Kristall als nichtlineares Medium verwendet. Die Kontrastverbesserung ist im Wesentlichen durch den Kontrast des polarisierenden Elementes zur Trennung der ursprünglichen Eingangsstrahlung von der neu erzeugten Strahlung bestimmt und liegt typsicherweise bei zwei bis drei Größenordnungen. Die Effizienz der Kontrastverbesserung ist im Bereich von 15 % und kann in Ausnahmefällen bis zu 30 % betragen. Nachteile ergeben sich durch den recht engen Leistungsbereich, in dem die Methode verwendet werden kann. Einerseits ist bereits eine hohe Pulsspitzenintensität nötig, um den Prozess effizient zu treiben, andererseits ist die maximale Intensität durch Selbstfokussierung und Weißlichterzeugung im Kristall beschränkt (vgl. A. Jullien, O. Albert, F. Burgy, G. Hamoniaux, J.-P. Rousseau, J.-P. Chambaret, F. Augé-Rochereau, G. Chériaux, J. Etchepare, N. Minkovski, S. M. Saltiel "10-10 Temporal contrast for femtosecond ultraintense lasers by cross-polarized wave generation", Opt. Lett. 30, p. 920, 2005; A. Jullien, J.-P. Rousseau, B. Mercier, L. Antonucci, O. Albert, G. Chériaux, S. Kourtev, N. Minkovski and S. S. Saltiel, "Highly-efficient nonlinear filter for femtosecond pulse contrast enhancement and pulse shortening", Opt. Lett., 33, p. 2353, 2008; US 7,430,351 B2).

Des Weiteren kann die nichtlineare intensitätsabhängige Veränderung des Polarisationszustandes in optischen Fasern genutzt werden, um den zeitlichen Pulskontrast zu erhöhen. Ein nachgeschalteter Polarisator "reinigt" den Laserpuls. Ähnlich wie bei der XPW-Methode bestimmt der Kontrast dieses Polarisators die erreichbare Kontrastverbesserung (vgl. D. Homoelle et.al., "Pulse contrast enhancement of high-energy pulses by use of a gas-filled hollow waveguide,", Opt. Lett. 27, p. 1646, 2002).

Weiter kann aufgrund der Intensitätsabhängigkeit der Konversionseffizienz jeder nichtlineare Frequenzkonversionsprozess genutzt werden, um den zeitlichen Pulskontrast zu verbessern, wobei die Kontrastverbesserung vom Grad der Nichtlinearität abhängt und damit bei gebräuchlichen Systemen nur wenige Größenordnungen beträgt (vgl. Y. Wang et.al., "Efficient conversion of picosecond laser pulses into second-harmonic frequency using group-velocity dispersion," Phys. Rev. A 41, p. 5645, 1990).

Vor diesem Hintergrund ist es Aufgabe der Erfindung, ein Lasersystem sowie ein Verfahren bereit zu stellen, das mit einfachen Mitteln die Erhöhung des zeitlichen Pulskontrastes auf mehrere Größenordnungen ermöglicht. Die Methode soll möglichst flexibel einsetzbar, hochleistungstauglich und effizient sein.

Diese Aufgabe löst die Erfindung durch ein Lasersystem gemäß Anspruch 1.

Außerdem löst die Erfindung die Aufgabe durch ein Verfahren zur Erzeugung von Laserpulsen gemäß Anspruch 9.

Kern der Erfindung ist - mit anderen Worten - eine zweifache, nacheinander ausgeführte spektrale Filterung der Laserstrahlung. In einem ersten Schritt (spektrale Begrenzung) wird der gesamte unerwünschte Strahlungsuntergrund in dem spektralen Bereich jenseits der Grenzfrequenz unterdrückt. Danach wird durch die nichtlineare Frequenzkonversion spektrale Intensität in genau dem zuvor von jeglichem Untergrund befreiten Spektralbereich erzeugt. Bei der anschließenden spektralen Filterung passiert nun lediglich Intensität aus dem spektralen Bereich, der zuvor durch die spektrale Begrenzung von unerwünschten Untergrund befreit wurde. Das Resultat sind Laserpulse mit sehr hohem zeitlichem Kontrast. Der Kontrast ist letztlich nur begrenzt durch die Filtergüte, d.h. die (möglichst geringe) Überlappung der spektralen Durchlasskurve des optischen Filters mit der spektralen Durchlasskurve des spektralen Begrenzungsmittels bzw. die Kantensteilheit des optischen Filters und des spektralen Begrenzungsmittels.

Die Formulierung "keine spektralen Anteile" oder "für die spektralen Anteile [...] undurchlässig" bedeutet im Sinne der Erfindung, das die Intensität der betreffenden spektralen Anteile entsprechend dem resultierenden Kontrast durch die spektrale Begrenzung bzw. durch die Filterung reduziert wird. Es ist nicht erforderlich, dass die Intensität in dem jeweiligen Spektralbereich dadurch tatsächlich vollständig unterdrückt, d.h. gleich Null ist.

Die Formulierung "jenseits der Grenzfrequenz" kann im Sinne der Erfindung sowohl oberhalb als auch unterhalb der Grenzfrequenz bedeuten. Es ist möglich, die Laserstrahlung zu niedrigen Frequenzen hin spektral zu begrenzen (z.B. durch ein Hochpassfilter), um danach durch nichtlineare Frequenzkonversion spektrale Anteile bei niedrigeren Frequenzen (unterhalb der Grenzfrequenz) zu erzeugen und entsprechend bei der spektralen Filterung nur Frequenzen unterhalb der Grenzfrequenz durchzulassen. Es ist alternativ ebenso möglich, die Laserstrahlung zu hohen Frequenzen hin spektral zu begrenzen (z.B. durch ein Tiefpassfilter), um danach durch nichtlineare Frequenzkonversion spektrale Anteile bei höheren Frequenzen (oberhalb der Grenzfrequenz) zu erzeugen und entsprechend bei der spektralen Filterung nur Frequenzen oberhalb der Grenzfrequenz durchzulassen.

Bei einer möglichen Ausgestaltung umfasst das spektrale Begrenzungsmittel ein optisches Bandpass- oder Kantenfilter, das für Laserstrahlung jenseits der Grenzfrequenz undurchlässig ist. Zur maximalen Unterdrückung der spektralen Anteile jenseits der Grenzfrequenz kann das entsprechende Filter mehrfach von der Laserstrahlung durchlaufen werden.

Auch für das optische Filter, das dem nichtlinearen optischen Element nachgeschaltet ist, eignet sich ein optisches Bandpass- oder Kantenfilter. Dieses ist für Laserstrahlung jenseits der Grenzfrequenz durchlässig. Realisiert werden kann das Filter z.B. durch ein Faser-Bragg-Gitter, ein Interferenzfilter oder ein Farbfilter.

Bei einer bevorzugten Ausgestaltung des erfindungsgemäßen Lasersystems wird, zur Erzeugung von Laserpulsen hoher Leistung, die von dem Kurzpulslaser emittierte Laserstrahlung durch Chirped Pulse Amplification (CPA) verstärkt, wobei die Laserstrahlung, wie bei CPA-Systemen üblich, einen Pulsstrecker, einen optischen Verstärker und einen Pulskompressor durchläuft. CPA-Systeme umfassen als dispersive Elemente im Pulskompressor üblicherweise eine Anordnung aus optischen Gittern oder Prismen, wodurch die verschiedenen spektralen Anteile räumlich separiert werden und unterschiedliche Wegstrecken durchlaufen. Es ist dabei mit Vorteil möglich, die erfindungsgemäße spektrale Begrenzung im Pulskompressor zu bewirken, z.B. durch eine Blende im Strahlengang, die die spektralen Anteile jenseits der Grenzfrequenz ausblendet, oder durch geeignete geometrische Bemessung des Gitters, so dass die Strahlungsanteile jenseits der Grenzfrequenz abgeschnitten werden. Bei dieser Ausgestaltung bildet also der Pulskompressor des CPA-Systems das spektrale Begrenzungsmittel.

Bei einer weiteren bevorzugten Ausgestaltung erzeugt das nichtlineare optische Element die frequenzkonvertierte Laserstrahlung durch Selbstphasenmodulation (SPM). Aufgrund von Kerr-Nichtlinearität in dem nichtlinearen optischen Medium entstehen im Spektrum der gepulsten Laserstrahlung neue spektrale Anteile. Die Grenzfrequenz ist dabei so abzustimmen, dass die neuen spektralen Anteile in Bezug auf das Spektrum der ursprünglich von dem Kurzpulslaser erzeugten Laserstrahlung jenseits der Grenzfrequenz liegen. Erfindungsgemäß wird jedes bekannte nichtlineare optische Element verwendet, das durch spektrale Verbreiterung Intensität in neuen Spektralbereichen erzeugt. Die neu erzeugten spektralen Anteile sollten in diesen Spektralbereichen möglichst eine nahezu flache oder kompensierbare Phase aufweisen. Geeignete nichtlineare optische Elemente sind z.B. konventionelle optische Singlemodefasern oder Singlemode-Wellenleiter, hoch-nichtlineare optische Fasern, photonische Kristallfasern, gasgefüllte mikrostrukturierte Hohlkernfasern (z.B. Kagome-Fasern), gasgefüllte Kapillaren oder auch volumenoptische Elemente, wie z.B. Glas-, YAG-, oder Saphir-Körper. Diese große Auswahl an möglichen nichtlinearen optischen Elementen begründet die hohe Flexibilität der erfindungsgemäßen Methode zur Kontrastverbesserung. Der verwendete Kurzpulslaser kann demnach eine Pulsenergie im Bereich von pJ bis hin zu Joule (oder darüber hinaus) aufweisen, die Pulsdauer der Laserpulse kann von wenigen Femtosekunden bis hin zu mehr als 100 Pikosekunden reichen.

Ein Ausführungsbeispiel der Erfindung wird nachfolgend anhand der Zeichnungen erläutert. Es zeigen:
- Figur 1:: schematische Darstellung eines erfindungsgemäßen Lasersystems;
- Figur 2:: Zeitverlauf und Spektrum eines Laserpulses mit geringem zeitlichem Kontrast;
- Figur 3:: Zeitverlauf und Spektrum des Laserpulses nach Frequenzkonversion durch Kerr-Nichtlinearität;
- Figur 4:: Zeitverlauf und Spektrum des Laserpulses mit hohem zeitlichem Kontrast nach spektraler Filterung.

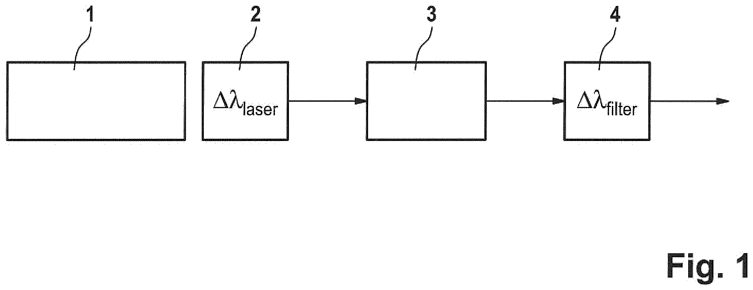

Figur 1 zeigt schematisch ein erfindungsgemäßes Lasersystem. Die erfindungsgemäße Methode basiert auf der spektralen Verbreiterung durch SPM gefolgt von einer spektralen Filterung. Wesentlich ist dabei, dass ein Kurzpulslaser 1, dessen zeitlicher Kontrast einer Verbesserung unterzogen werden soll, am Ausgang ein spektrales Begrenzungsmittel 2 aufweist, das eine möglichst scharfe spektrale Begrenzung bewirkt, so dass Strahlung mit spektraler Intensität jenseits einer Grenzfrequenz möglichst vollständig unterdrückt wird. In einem nichtlinearen optischen Element 3 werden nun durch SPM neue spektrale Anteile erzeugt, die sich jenseits der Grenzfrequenz befinden. Durch ein optisches Filter 4 wird die spektral verbreiterte Strahlung gefiltert, wobei diejenigen spektralen Anteile selektiert werden, die im Spektrum der spektral begrenzten Strahlung des Kurzpulslasers 1, d.h. am Ausgang des spektralen Begrenzungsmittels 2, keine Intensität aufweisen. Durch die dargestellte Anordnung lässt sich ein Laserpulszug mit nahezu beliebig hohem Kontrast erzeugen. Die Kontrastverbesserung ist nur durch die spektrale Form des Filters 4 (Kantensteilheit) nach der nichtlinearen spektralen Verbreiterung bestimmt. Anzumerken ist, dass neben der Kontrastverbesserung eine Verkürzung der Pulsdauer und eine Verschiebung der Zentralwellenlänge stattfindet. Beide Effekte hängen von der Pulsdauer der von dem Kurzpulslaser erzeugten Laserpulse und der Stärke der nichtlinearen Verbreiterung ab.

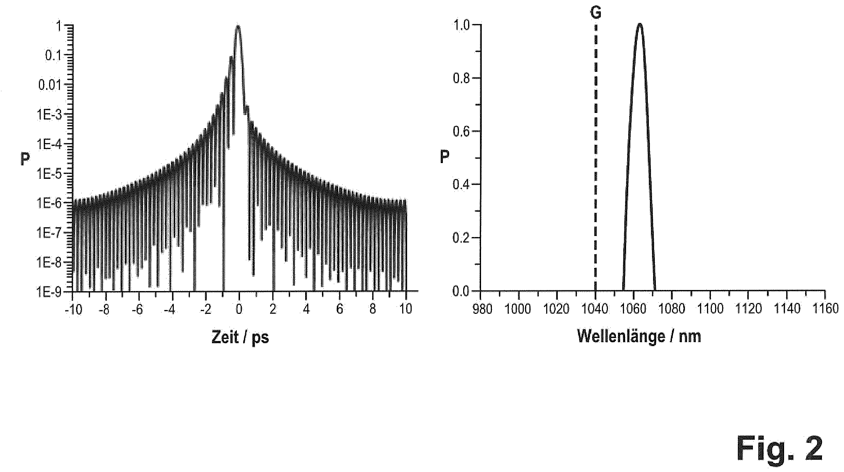

Das linke Diagramm der Figur 2 zeigt einen kontrastarmen Laserpuls am Ausgang des spektralen Begrenzungsmittels 2 bei einer Zentralwellenlänge von 1064 nm (Leistung P in willkürlichen Einheiten als Funktion der Zeit in ps). Der Pulskontrast beträgt nur ca. 10 dB bezogen auf den ersten Nebenpuls. Das rechte Diagramm zeigt das zugehörige Spektrum. Durch die spektrale Begrenzung enthält das Spektrum keine spektralen Anteile oberhalb einer Grenzfrequenz G. Entsprechend zeigt das Diagramm keine spektralen Anteile bei Wellenlängen unterhalb der bei dem Ausführungsbeispiel zu der Grenzfrequenz G gehörigen Wellenlänge von 1040 nm.

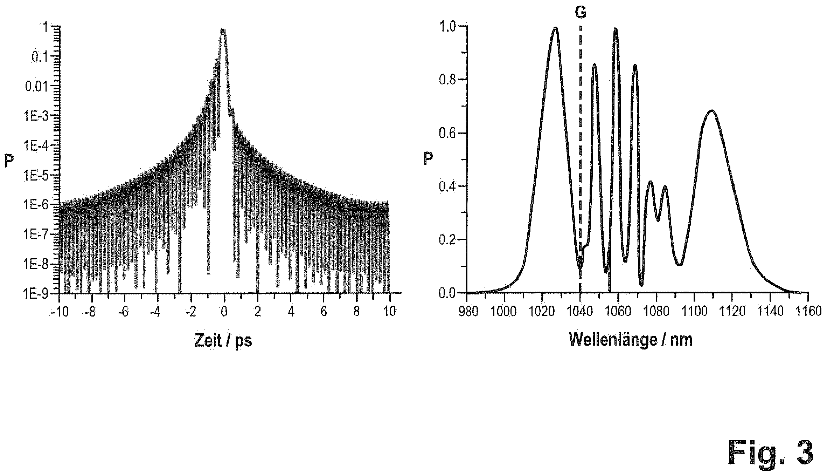

Die spektrale Verbreiterung wird in dem Ausführungsbeispiel erzielt durch die Propagation des Laserpulses mit einer Pulsenergie von 100 nJ durch eine 17 mm lange Wechselwirkungsstrecke in dem bei dem Ausführungsbeispiel als Quarzglasfaser ausgebildeten nichtlinearen Element 3 mit einem Modenfelddurchmesser von 10 µm. Erwartungsgemäß ändert die Kerr-Nichtlinearität an der zeitlichen Intensitätsverteilung nichts, wie man in dem linken Diagramm der Figur 3 erkennt, jedoch wird eine Phase aufgeprägt, die zu einer spektralen Verbeiterung führt, wie im rechten Diagramm der Figur 3 dargestellt. Deutlich ausgeprägt sind spektrale Anteile bei Wellenlängen unterhalb 1040 nm, d.h. jenseits der Grenzfrequenz G.

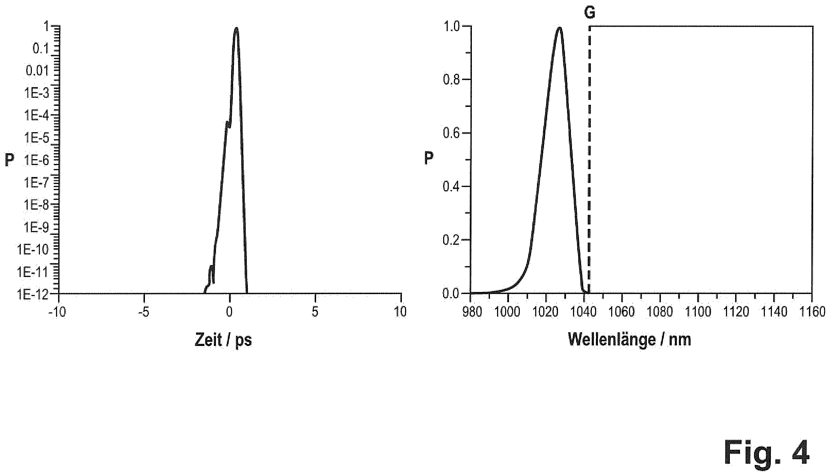

Durch hinreichend starke (kontrastreiche) Dämpfung von Wellenlängen unterhalb der Grenzfrequenz G, d.h. oberhalb von 1040 nm mittels des optischen Filters 4, z.B. mittels Kantenfilter, wird der zeitliche Kontrast um einige Größenordnungen gesteigert, wie in dem linken Diagramm der Figur 4 dargestellt, das den zeitlichen Pulsverlauf am Ausgang des optischen Filters 4 zeigt. Das rechte Diagramm zeigt das zugehörige Spektrum, wobei der von dem Filter 4 unterdrückte spektrale Bereich bei Wellenlängen oberhalb von 1040 nm markiert ist. Der Kontrast des Pikosekundenpulses beträgt nun mehr als 120 dB.

Die Güte der Kontraststeigerung wird im Wesentlichen durch die spektrale Form des Filters 4 bestimmt. Ist diese zu steil, entsteht ein Untergrund im Zeitbereich, ist diese "weich" (was in der Realität der Fall ist), kann ein nahezu beliebig hoher zeitlicher Kontrast erreicht werden.

Anzumerken ist, dass in dem Ausführungsbeispiel mehr als 35 % der ursprünglichen Pulsenergie im "gereinigten" Pulszug enthalten bleiben und dass zudem eine Pulsdauerverkürzung von ca. 250 fs auf 100 fs zu beobachten ist.

Beispielhaft seien noch praktisch mögliche Konfigurationen des erfindungsgemäßen Lasersystems genannt:
Bei einer möglichen Konfiguration umfasst der Kurzpulslaser 1 ein Verstärkersystem basierend auf Ytterbium- oder Neodym-dotierten Lasermaterialien und erzeugt gepulste Laserstrahlung um 1064 nm Wellenlänge mit vergleichsweise geringem zeitlichem Kontrast. Durch SPM werden spektrale Anteile um 1030 nm erzeugt, welche nach spektraler Filterung (d.h. Dämpfung des ursprünglichen 1064 nm-Signals) als kontrastreiche Strahlung für Anwendungen zur Verfügung steht oder als Eingangssignal eines weiteren Verstärkersystems auf Ytterbium-Basis dient.

Bei einer anderen möglichen Konfiguration umfasst der Kurzpulslaser 1 ein Verstärkersystem basierend auf Ytterbium- oder Neodym-dotierten Lasermaterialien und erzeugt gepulste Laserstrahlung um 1030 nm Wellenlänge mit vergleichsweise schlechtem zeitlichem Kontrast. Durch SPM werden spektrale Anteile um 800 nm erzeugt, welche nach spektraler Filterung (Dämpfung des ursprünglichen 1030 nm-Signals) als kontrastreiche Strahlung für Anwendungen zur Verfügung steht oder als Eingangssignal eines Verstärkersystems auf Titan-Saphir-Basis dient.

## Patentansprüche

1. Lasersystem mit
- einem Kurzpulslaser (1),
- einem spektralen Begrenzungsmittel (2), das eine von dem Kurzpulslaser (1) emittierte gepulste Laserstrahlung mit einer Pulsdauer empfängt und in spektral begrenzte Laserstrahlung, die keine spektralen Anteile jenseits einer Grenzfrequenz (G) aufweist, umwandelt,
- einem nichtlinearen optischen Element (3), das die spektral begrenzte Laserstrahlung empfängt und durch spektrale Verbreiterung in frequenzkonvertierte Laserstrahlung, die spektrale Anteile jenseits der Grenzfrequenz (G) aufweist, umwandelt, und
- einem optischen Filter (4), das für die spektralen Anteile der frequenzkonvertierten Laserstrahlung jenseits der Grenzfrequenz (G) durchlässig und für die spektral begrenzte Laserstrahlung undurchlässig ist,
wobei die Anordnung aus dem Kurzpulslaser (1), dem spektralen Begrenzungsmittel (2), dem nichtlinearen optischen Element (3) und dem optischen Filter (4) dazu ausgelegt ist, eine Verkürzung der Pulsdauer und eine Verschiebung der Zentralwellenlänge der Laserstrahlung zu bewirken.

2. Lasersystem nach Anspruch, **dadurch gekennzeichnet, dass** das spektrale Begrenzungsmittel (2) ein optisches Bandpass- oder Kantenfilter umfasst, das für Laserstrahlung jenseits der Grenzfrequenz undurchlässig ist.

3. Lasersystem nach Anspruch 1 oder 2, **dadurch gekennzeichnet, dass** das optische Filter (4) ein optisches Bandpass- oder Kantenfilter ist, das für Laserstrahlung jenseits der Grenzfrequenz durchlässig ist.

4. Lasersystem nach einem der Ansprüche 1 bis 3, **dadurch gekennzeichnet, dass** die von dem Kurzpulslaser (1) emittierte Laserstrahlung durch Chirped Pulse Amplification verstärkt wird, wobei die Laserstrahlung einen Pulsstrecker, einen optischen Verstärker und einen Pulskompressor durchläuft.

5. Lasersystem nach Anspruch 4, **dadurch gekennzeichnet, dass** der Pulskompressor wenigstens ein Beugungsgitter oder ein Prisma umfasst.

6. Lasersystem nach Anspruch 4 oder 5, **dadurch gekennzeichnet, dass** das spektrale Begrenzungsmittel durch den Pulskompressor gebildet ist.

7. Lasersystem nach einem der Ansprüche 1 bis 6, **dadurch gekennzeichnet, dass** das nichtlineare optische Element (3) die frequenzkonvertierte Laserstrahlung durch Selbstphasenmodulation erzeugt.

8. Lasersystem nach einem der Ansprüche 1 bis 7, **dadurch gekennzeichnet, dass** das nichtlinearen optische Element (3) eine optische Singlemodefaser, eine photonische Kristallfaser, eine gasgefüllte mikrostrukturierte Hohlkernfaser, eine gasgefüllte Kapillare, einen Glaskörper, einen YAG-Körper oder einen Saphir-Körper umfasst.

9. Verfahren zur Erzeugung von Laserpulsen mit hohem zeitlichem Kontrast, mit den Verfahrensschritten
- Erzeugung von gepulster Laserstrahlung mit einer Pulsdauer mittels eines Kurzpulslasers (1),
- Umwandlung der Laserstrahlung in spektral begrenzte Laserstrahlung mittels eines spektralen Begrenzungsmittels (2), so dass diese keine spektralen Anteile jenseits einer Grenzfrequenz (G) aufweist,
- Durch spektrale Verbreiterung, Umwandlung der spektral begrenzten Laserstrahlung in frequenzkonvertierte Laserstrahlung mittels eines nicht linearen optischen Elements (3), so dass die frequenzkonvertierte Laserstrahlung spektrale Anteile jenseits der Grenzfrequenz aufweist, und
- spektrale Filterung mittels Verwendung eines optischen Filters (4) der frequenzkonvertierten Laserstrahlung, wobei der verwendete optische Filter nur jenseits der Grenzfrequenz durchlässig ist,
wobei eine Verkürzung der Pulsdauer und eine Verschiebung der Zentralwellenlänge der Laserstrahlung stattfinden.

## Claims

1. Laser system comprising
- a short pulse laser (1),
- a spectral limitation means (2) which receives pulsed laser radiation, emitted by the short pulse laser (1) and having a pulse duration, and converts it into spectrally limited laser radiation which does not comprise any spectral portions beyond a limit frequency (G),
- a non-linear optical element (3) which receives the spectrally limited laser radiation and converts it, by spectral broadening, into frequency-converted laser radiation which comprises spectral portions beyond the limit frequency (G), and
- an optical filter (4) which is permeable for the spectral portions of the frequency-converted laser radiation beyond the limit frequency (G) and is impermeable for the spectrally limited laser radiation,
wherein the assembly constituted by the short pulse laser (1), the spectral limitation means (2), the non-linear optical element (3), and the optical filter (4), is configured effect a shortening of the pulse duration and a shift of the central wavelength of the laser radiation.

2. Laser system according to claim 1, **characterised in that** the spectral limitation means (2) comprises a band-pass or edge filter, which is impermeable for laser radiation beyond the limit frequency.

3. Laser system according to either claim 1 or claim 2, **characterised in that** the optical filter (4) is an optical band-pass or edge filter, which is permeable for laser radiation beyond the limit frequency.

4. Laser system according to any of claims 1 to 3, **characterised in that** the laser radiation emitted by the short pulse laser (1) is amplified by means of chirped pulse amplification, wherein the laser radiation passes through a pulse stretcher, an optical amplifier, and a pulse compressor.

5. Laser system according to claim 4, **characterised in that** the pulse compressor comprises at least one diffraction grating or one prism.

6. Laser system according to either claim 4 or claim 5, **characterised in that** the spectral limitation means is formed by the pulse compressor.

7. Laser system according to any of claims 1 to 6, **characterised in that** the non-linear optical element (3) generates the frequency-converted laser radiation by means of self-phase modulation.

8. Laser system according to any of claims 1 to 7, **characterised in that** the non-linear optical element (3) comprises an optical single-mode fibre, a photonic crystal fibre, a gas-filled microstructured hollow-core fibre, a gas-filled capillary, a glass body, a YAG body, or a sapphire body.

9. Method for generating laser pulses having a high temporal contrast, comprising the method steps of:
- generating pulsed laser radiation, having a pulse duration, by means of a short pulse laser (1),
- converting the laser radiation into spectrally limited laser radiation by means of a spectral limitation means (2), such that said radiation does not comprise any spectral portions beyond a limit frequency (G),
- by means of spectral preparation, converting the spectrally limited laser radiation into frequency-converted laser radiation, by means of a non-linear optical element (3), such that the frequency-converted laser radiation comprises spectral portions beyond the limit frequency, and
- spectral filtering, by using an optical filter (4), of the frequency-converted laser radiation, wherein the optical filter used is permeable only beyond the limit frequency,
wherein a shortening of the pulse duration and a shift of the central wavelength of the laser radiation take place.

## Revendications

1. Système laser avec
- un laser à impulsions courtes (1),
- un moyen de limitation spectrale (2), qui reçoit un rayonnement laser pulsé émis par le laser à impulsions courtes (1) avec une durée d'impulsion et le convertit en un rayonnement laser limité spectralement qui ne présente aucune composante spectrale au-delà d'une fréquence limite (G),
- un élément optique non linéaire (3), qui reçoit le rayonnement laser limité spectralement et le convertit par élargissement spectral en un rayonnement laser à conversion de fréquence, qui présente des composantes spectrales au-delà de la fréquence limite (G), et
- un filtre optique (4), qui laisse passer les composantes spectrales du rayonnement laser à conversion de fréquence au-delà de la fréquence limite (G) et ne laisse pas passer le rayonnement laser limité spectralement,
dans lequel l'ensemble composé du laser à impulsions courtes (1), du moyen de limitation spectrale (2), de l'élément optique non linéaire (3) et du filtre optique (4) est conçu pour entraîner une réduction de la durée d'impulsion et un décalage de la longueur d'onde centrale du rayonnement laser.

2. Système laser selon la revendication 1, **caractérisé en ce que** le moyen de limitation spectrale (2) comprend un filtre optique passe-bande ou à arêtes qui ne laisse pas passer le rayonnement laser au-delà de la fréquence limite.

3. Système laser selon la revendication 1 ou 2, **caractérisé en ce que** le filtre optique (4) est un filtre optique passe-bande ou à arêtes qui laisse passer le rayonnement laser au-delà de la fréquence limite.

4. Système laser selon l'une quelconque des revendications 1 à 3, **caractérisé en ce que** le rayonnement laser émis par le laser à impulsions courtes (1) est amplifié par amplification d'impulsions comprimées, dans lequel le rayonnement laser traverse un étireur d'impulsions, un amplificateur optique et un compresseur d'impulsions.

5. Système laser selon la revendication 4, **caractérisé en ce que** le compresseur d'impulsions comprend au moins un réseau de diffraction ou un prisme.

6. Système laser selon la revendication 4 ou 5, **caractérisé en ce que** le moyen de limitation spectrale est formé par le compresseur d'impulsions.

7. Système laser selon l'une quelconque des revendications 1 à 6, **caractérisé en ce que** l'élément optique non linéaire (3) produit le rayonnement laser à conversion de fréquence par automodulation de phases.

8. Système laser selon l'une quelconque des revendications 1 à 7, **caractérisé en ce que** l'élément optique non linéaire (3) comprend une fibre optique monomode, une fibre à cristal photonique, une fibre à âme creuse microstructurée remplie de gaz, un capillaire rempli de gaz, un corps en verre, un corps à base de YAG ou un corps en saphir.

9. Procédé de production d'impulsions laser avec un contraste temporel élevé, avec les étapes de procédé
- de production d'un rayonnement laser pulsé avec une durée d'impulsion au moyen d'un laser à impulsions courtes (1),
- de conversion du rayonnement laser en un rayonnement laser limité spectralement au moyen d'un moyen de limitation spectrale (2) de sorte que celui-ci ne présente aucune composante spectrale au-delà d'une fréquence limite (G),
- de conversion par élargissement spectral du rayonnement laser limité spectralement en rayonnement laser à conversion de fréquence au moyen d'un élément optique non linéaire (3) de sorte que le rayonnement laser à conversion de fréquence présente des composantes spectrales au-delà de la fréquence limite, et
- de filtrage spectral au moyen de l'utilisation d'un élément optique (4) du rayonnement laser à conversion de fréquence, dans lequel
le filtre optique utilisé est perméable seulement au-delà de la fréquence limite, dans lequel une réduction de la durée d'impulsion et un décalage de la longueur d'onde centrale du rayonnement laser ont lieu.
